# EUROPEAN PATENT APPLICATION

(11) **EP 4 629 087 A1**
(43) Date of publication of application: **08.10.2025**
(21) Application number: 23915572.4
(22) Date of filing: 10.08.2023
(51) Int. Cl.: G06F 11/22

(54) **TERMINAL DEVICE, AND EXTERNAL DEVICE ACCESS DETECTION SYSTEM**

(30) Priority: 10.01.2023 CN 202310030001
(71) Applicant: Honor Device Co., Ltd., Shenzhen, Guangdong 518040 (CN)
(72) Inventor: WANG, Huiwen, Shenzhen, Guangdong 518040 (CN); HU, Jie, Shenzhen, Guangdong 518040 (CN)
(74) Representative: Isarpatent
(86) International application number: PCT/CN2023/112370
(87) International publication number: WO 2024/148811

(57) **Abstract**

Embodiments of this application relate to the technical field of terminals, and provide a terminal device and a system for detecting connection of an external device. The terminal device includes a power supply module, a first element, a pogo pin connector, and a processor. The first element is an element having a resistance value less than a specific value. The power supply module includes a positive connection terminal and a negative connection terminal. The pogo pin connector includes a positive pin and a negative pin. The first element is connected to a path between the positive connection terminal and the positive pin, or the first element is connected to a path between the negative connection terminal and the negative pin. The processor is configured to determine that an external device is connected to the terminal device when detecting that a voltage difference exists between two terminals of the first element. In this way, it may be determined that the external device is connected to the terminal device through detection of the voltage difference existing between the two terminals of the first element, without a need to arrange a Hall element in the terminal device, which alleviates a failure of the terminal device in detecting connection of the external device, and improves accuracy of detection of the external device.

## Description

This application claims priority to Chinese Patent Application No. 202310030001.X, filed with the China National Intellectual Property Administration on January 10, 2023 and entitled "TERMINAL DEVICE AND SYSTEM FOR DETECTING CONNECTION OF EXTERNAL DEVICE", which is incorporated herein by reference in its entirety.

### TECHNICAL FIELD

This application relates to the technical field of terminals, and in particular, to a terminal device and a system for detecting connection of an external device.

### BACKGROUND

In response to the development of terminal technologies, a terminal device usually has a pogo pin connector. The terminal device may be connected to another device (for example, a keyboard having the pogo pin connector) through the pogo pin connector, and supply power for the another device or communicate with the another device through the pogo pin connector.

In some implementations, the terminal device is provided with a Hall element, and a soft circuit board of the Hall element is mounted at a position of the pogo pin connector. When the keyboard is connected to the terminal device through the pogo pin connector, and a magnet on the keyboard covers a position of the soft circuit board, the Hall element may detect a change in a magnetic field, and send an interrupt signal to a processor of the terminal device. The processor determines keyboard connection based on a received interrupt signal.

However, in the foregoing implementations, a case in which the terminal device cannot detect the keyboard connection may exist, resulting in relatively low accuracy for detecting connection of an external device.

### SUMMARY

Embodiments of this application provide a terminal device and a system for detecting connection of an external device, so as to determine that an external device is connected to the terminal device when a voltage difference exists between two terminals of a first element, thereby improving accuracy for detecting connection of the external device.

According to a first aspect, an embodiment of this application provides a terminal device, including a power supply module, a first element, a pogo pin connector, and a processor, where the first element is an element having a resistance value less than a specific value. The power supply module includes a positive connection terminal and a negative connection terminal. The pogo pin connector includes a positive pin and a negative pin. The first element is connected to a path between the positive connection terminal and the positive pin, or the first element is connected to a path between the negative connection terminal and the negative pin. The processor is configured to determine that an external device is connected to the terminal device when detecting that a voltage difference exists between two terminals of the first element. In this way, when the external device is connected to the terminal device through the pogo pin connector, the processor can determine that the external device is connected to the terminal device without arranging a Hall element in the terminal device based on a detected voltage difference between the two terminals of the first element. In other words, a magnet of the external device is not required to be precisely placed at a position of a soft circuit board of the Hall element, thereby improving a case in which the terminal device does not detect keyboard connection, and improving accuracy of detection of the external device connection.

In a possible implementation, the terminal device further includes a protection circuit and a voltage comparison unit, where one terminal of the protection circuit is connected to one terminal of the first element, an other terminal of the protection circuit is connected to a first terminal of the voltage comparison unit, a second terminal of the voltage comparison unit is connected to an other terminal of the first element, and a third terminal of the voltage comparison unit is connected to the processor; the voltage comparison unit is configured to detect a voltage difference between the two terminals of the first element, and send a first signal to the processor when detecting the voltage difference existing between the two terminals of the first element; and the processor is specifically configured to determine that the external device is connected to the terminal device when receiving the first signal. In this way, elements in the circuit may be protected through the protection circuit, and a voltage difference existing between the two terminals of the first element is detected through the voltage comparison unit, and the first signal is sent to the processor. In this way, the processor of the terminal device can determine that the external device is connected to the terminal device based on the received first signal of the voltage comparison unit, thereby further improving accuracy for detecting connection of the external device.

In a possible implementation, the voltage comparison unit includes a voltage comparator or an analog-to-digital converter ADC chip. In this way, whether the voltage difference exists between two terminals of the first element may be detected through the voltage comparator or the ADC chip, which can improve accuracy of detection of the voltage difference between the two terminals of the first element.

In a possible implementation, the terminal device further includes the protection circuit, where one terminal of the protection circuit is connected to one terminal of the first element, an other terminal of the protection circuit is connected to a first input terminal of the processor, and a second input terminal of the processor is connected to an other terminal of the first element; and the processor is specifically configured to detect the voltage difference between the two terminals of the first element, and determine that an external device is connected to the terminal device when detecting that a voltage difference exists between two terminals of the first element. In this way, the voltage difference existing between the two terminals of the first element may be detected through the processor, and another element does not need to detect the voltage difference existing between the two terminals of the first element, thereby reducing costs of the terminal device.

In a possible implementation, the first element includes any of the following: a diode, a reed switch, a magneto-sensitive diode, and a magneto-sensitive switch. In this way, when the external device is connected to the terminal device, the processor can determine that the external device is connected to the terminal device based on the detected voltage difference existing between the two terminals of the first element. Compared with the Hall element, the first element has relatively low costs.

In a possible implementation, the processor is further configured to control a voltage outputted by the power supply module to increase from a first voltage value to a second voltage value when detecting the voltage difference existing between the two terminals of the first element. In this way, when the external device is not connected to the terminal device, the power supply module is connected to the pogo pin connector through the first element. Because a voltage outputted by the power supply module is relatively small, the pogo pin connector exposed to the air is not easily corroded, which may prolong a service life of the pogo pin connector. When the external device is connected to the terminal device, the processor controls the voltage outputted by the power supply module to be increased to the second voltage value, so that the terminal device may use a larger voltage value to supply power to the external device.

In a possible implementation, when the first element includes the diode, the first voltage value is greater than a turn-on voltage of the diode. In this way, when the external device is connected to the terminal device, the first power supply module, the diode, and the external device may form a path, so that a voltage difference exists between two terminals of the diode.

In a possible implementation, the power supply module includes a first power supply module and a second power supply module, and a voltage outputted by the first power supply module is less than a voltage outputted by the second power supply module; and the processor is further configured to control the first element to be switched to be connected to a path between a second positive connection terminal of the second power supply module and the positive pin when detecting the voltage difference existing between two terminals of the first element and the first element being connected to a path between a first positive connection terminal of the first power supply module and the positive pin, or is further configured to control the first element to be switched to be connected to a path between a second negative connection terminal of the second power supply module and the negative pin when the voltage difference existing between the two terminals of the first element is detected and the first element is connected to a path between a first negative connection terminal of the first power supply module and the negative pin. In this way, when the external device is not connected to the terminal device, the first power supply module is connected to the pogo pin connector through the first element. Because a voltage outputted by the first power supply module is relatively small, the pogo pin connector exposed to the air is not easily corroded, which may prolong a service life of the pogo pin connector. When the external device is connected to the terminal device, the processor may be configured to control switching of the path on which the first element is located, so that the terminal device supplies power to the external device through the second power supply module outputting a relatively large voltage.

In a possible implementation, when the first element includes the diode, the voltage value outputted by the first power supply module is greater than the turn-on voltage value of the diode. In this way, when the external device is connected to the terminal device, the first power supply module, the diode, and the external device may form a path, so that a voltage difference exists between two terminals of the diode.

According to a second aspect, an embodiment of this application provides a method for detecting connection of an external device. The method is applied to the terminal device in any one of the possible implementations of the first aspect, including: when detecting a voltage difference existing between two terminals of a first element, a processor of the terminal device determines that the external device is connected to the terminal device.

In a possible implementation, the method further includes: when detecting a voltage difference existing between two terminals of the first element, a voltage comparison unit sends a first signal to the processor; and when receiving the first signal, the processor determines that the external device is connected to the terminal device.

In a possible implementation, the voltage comparison unit includes a voltage comparator. The method further includes: when detecting the voltage difference existing between two terminals of the first element, the voltage comparator sends a level signal to the processor; and when receiving the level signal, the processor determines that the external device is connected to the terminal device.

In a possible implementation, the voltage comparison unit includes an ADC chip. The method further includes: when detecting a voltage difference existing between two terminals of the first element, the ADC chip sends an ADC signal to the processor; and when receiving the ADC signal, the processor determines that the external device is connected to the terminal device.

In a possible implementation, the method further includes: when detecting a voltage difference existing between two terminals of the first element, the processor controls the voltage outputted by the power supply module to increase from a first voltage value to a second voltage value.

In a possible implementation, the power supply module includes a first power supply module and a second power supply module, and a voltage outputted by the first power supply module is less than a voltage outputted by the second power supply module. The method further includes: when detecting the voltage difference existing between two terminals of the first element and the first element being connected to a path between a first positive connection terminal of the first power supply module and a positive pin, the processor switches the first element to be connected to a path between a second positive connection terminal of the second power supply module and the positive pin; or
when detecting the voltage difference existing between two terminals of the first element and the first element being connected to a path between a first negative connection terminal of the first power supply module and a negative pin, the processor switches the first element to be connected to a path between a second negative connection terminal of the second power supply module and the negative pin.

According to a third aspect, an embodiment of this application provides an electronic device, including a processor and a memory. The memory is configured to store code instructions, and the processor is configured to run the code instructions to perform the method in any one of the second aspect or the possible implementations of the second aspect.

According to a fourth aspect, an embodiment of this application provides a computer-readable storage medium. The computer-readable storage medium stores a computer program or instructions. When the computer program or the instructions run on a computer, the computer is caused to perform the method in any one of the second aspect or the possible implementations of the second aspect.

According to a fifth aspect, an embodiment of this application provides a computer program product including a computer program. When the computer program runs on a computer, the computer is caused to perform the method in any one of the second aspect or the possible implementations of the second aspect.

According to a sixth aspect, this application provides a chip or a chip system. The chip or the chip system includes at least one processor and a communication interface. The communication interface and the at least one processor are interconnected through lines, and the at least one processor is configured to run a computer program or instructions to perform the method in any one of the second aspect or the possible implementations of the second aspect. The communication interface in the chip may be an input/output interface, a pin, a circuit, or the like.

In a possible implementation, the chip or chip system described above in this application further includes at least one memory, and the at least one memory stores instructions. The memory may be a storage unit inside the chip, for example, a register or a cache, or may be a storage unit (for example, a read-only memory or a random access memory) of the chip.

According to a seventh aspect, an embodiment of this application provides a system for detecting connection of an external device, including an external device and a terminal device in any one of the second aspect or the possible implementations of the second aspect, the external device and the terminal device are connected through the pogo pin connector, and the terminal device supplying power to the external device through the pogo pin connector.

It should be understood that the second aspect to the fourth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic structural diagram of an electronic device according to an embodiment of this application;
FIG. 2 is a schematic diagram of a use scenario of a terminal device according to an embodiment of this application;
FIG. 3 is a schematic diagram I of a circuit for detecting connection of an external device according to an embodiment of this application;
FIG. 4 is a schematic diagram II of a circuit for detecting connection of an external device according to an embodiment of this application;
FIG. 5 is a schematic diagram of a circuit for detecting connection of an external device including a voltage protection unit according to an embodiment of this application;
FIG. 6 is a schematic diagram of a circuit for detecting connection of an external device including a voltage comparator according to an embodiment of this application;
FIG. 7 is a schematic diagram of a circuit for detecting connection of an external device including an ADC chip according to an embodiment of this application;
FIG. 8 is a schematic diagram of a circuit for detecting connection of an external device including a first power supply module and a second power supply module according to an embodiment of this application;
FIG. 9 is a schematic diagram of a circuit for detecting disconnection of an external device from a terminal device according to an embodiment of this application;
FIG. 10 is a schematic diagram of a hardware structure of another terminal device according to an embodiment of this application; and
FIG. 11 is a schematic structural diagram of a chip according to an embodiment of this application.

### DESCRIPTION OF EMBODIMENTS

In embodiments of this application, words such as "first" and "second" are used for distinguishing between same or similar items with a basically same function and role. For example, a first chip and a second chip are merely configured to distinguish between different chips, and are not intended to limit a sequence thereof. A person skilled in the art may understand that the words such as "first" and "second" do not limit a quantity and an execution order, and the words such as "first" and "second" unnecessarily define a difference.

It should be noted that in embodiments of this application, the word "in an example" or "for example" or the like is used to represent giving an example, an illustration, or a description. Any embodiment or design solution described as "in an example" or "for example" in this application should not be explained as being more preferred or advantageous than another embodiment or design solution. Exactly, use of the words such as "in an example" or "for example" is intended to present a concept in a specific manner.

In embodiments of this application, "at least one" refers to one or more, and "a plurality of" refers to two or more. "And/or" describes an association relationship between associated objects and indicates that three relationships may exist. For example, A and/or B may represent the following cases: only A exists, both A and B exist, and only B exists, where A and B may be singular or plural. The character "/" generally indicates that the associated objects are in an "or" relationship. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be one or more.

A terminal device may be connected to an external device through a pogo pin connector, to implement supplying power to the external device and communicating with the external device. For example, after being connected to a keyboard through the pogo pin connector, a tablet computer may supply power to the keyboard and communicate with the keyboard. Alternatively, a wireless headset is connected to a headset charging case through the pogo pin connector, and the headset charging case may charge the wireless headset through the pogo pin connector.

In some implementations, the terminal device is provided with a Hall element, a soft circuit board of the Hall element is arranged on a position of the pogo pin connector in the terminal device, and the keyboard is provided with a magnet. When the keyboard is connected to the terminal device through the pogo pin connector, and the magnet on the keyboard covers the position of the soft circuit board of the Hall element in the terminal device, the Hall element may detect a magnetic field generated by the magnet, and send an interrupt signal to a processor of the terminal device, and the processor can determine that the keyboard is connected to the terminal device based on the interrupt signal. After determining that the keyboard is connected, the processor may communicate with the keyboard, and may control a power supply of the terminal device to supply power to the keyboard.

However, in the foregoing implementation, when the keyboard is connected to the terminal device, a user needs to manually adjust positions of the keyboard and the terminal device, so that the magnet on the keyboard precisely covers the position of the soft circuit board of the Hall element. A case in which the keyboard is connected to the terminal device through the pogo pin connector may exist, but the magnet on the keyboard does not cover the position of the soft circuit board of the Hall element, so that the terminal device cannot detect connection of the keyboard. In addition, costs of using the Hall element are relatively high.

In some other implementations, when the keyboard is connected to the terminal device through the pogo pin connector, the keyboard sends a heartbeat packet to the processor of the terminal device at regular intervals. The processor of the terminal device determines that the keyboard is connected to the terminal device based on the received heartbeat packet, communicates with the keyboard, and may further control the power supply of the terminal device to supply power to the keyboard. In a process in which the terminal device supplies power to the keyboard, the processor of the terminal device can determine an external state of the keyboard based on the received heartbeat packet.

However, in the foregoing implementations, the terminal device receives the heartbeat packet sent by the keyboard at regular intervals, to determine an in-place state of the keyboard, and processing of the terminal device needs to be continuously in an operating state, causing relatively large power consumption of the terminal device.

In view of the above, an embodiment of this application provides a terminal device. The terminal device includes a first element having a resistance value less than a specific value, and the first element is connected to a path between a positive connection terminal of a power supply module and a positive pin of the pogo pin connector, or the first element is connected to a path between a negative connection terminal of the power supply module and a negative pin of the pogo pin connector. In this way, when the external device is connected to the terminal device through the pogo pin connector, the power supply module, the first element, and the external device form a circuit, and a voltage difference exists between two terminals of the first element. As a result, when detecting the voltage difference existing between two terminals of the first element, the processor can determine that the external device is connected to the terminal device. The Hall element does not need to be arranged on the terminal device. In other words, a magnet on the external device does not need to cover the soft circuit board of the Hall element, which alleviates a failure of the terminal device in detecting connection of the external device, and improves accuracy for detecting a connection state of the external device by the terminal device. In addition, the terminal device does not need to receive a heartbeat packet sent by the external device, so that the processor of the terminal device may enter a sleep state based on an actual situation, thereby reducing power consumption of the terminal device.

In an example, the external device of this embodiment of this application may be an electronic device such as a keyboard, a wireless headset, or a smartwatch. The external device is not specifically limited in this embodiment of this application.

In an example, the terminal device in this embodiment of this application may be any form of electronic device. For example, the electronic device may include a handheld device having an image processing function, an on-board device, and the like. For example, some electronic devices are: a mobile phone (mobile phone), a tablet computer, a palmtop computer, a notebook computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an on-board device, a wearable device, a terminal device in a 5G network, a terminal device in a future evolved public land mobile network (public land mobile network, PLMN), or the like. This is not limited in this embodiment of this application.

As an example instead of a limitation, in this embodiment of this application, the electronic device may further be a wearable device. The wearable device may also be referred to as a wearable intelligent device, and is a generic term for wearable devices such as glasses, gloves, watches, clothes, and shoes that are developed through wearable technologies for intelligent design of daily wear. The wearable device is a portable device that is directly worn on a body or integrated into clothes or accessories of a user. The wearable device is not only a hardware device, but also implements a powerful function through software support, data interaction, and cloud interaction. In a broad sense, the wearable intelligent device includes full-function, large-size, and complete or partial functions that can be implemented without relying on a smartphone, for example, a smartwatch or smart glasses, and that focuses only on a specific type of application function and needs to be used with another device such as a smartphone, such as various smart bands and smart jewelry for physical sign monitoring.

In addition, in this embodiment of this application, the electronic device may further be a terminal device in an internet of things (internet of things, IoT) system. The IoT is an important part of future information technology development, and a main technical feature of the IoT is that an object is connected to a network through a communication technology, so as to implement an intelligent network of man-machine interconnection and thing-to-thing interconnection.

In this embodiment of this application, the electronic device may also be referred to as a terminal device, a user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, or a user apparatus.

In this embodiment of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), a memory (also referred to as a main memory). The operating system may be any one or more types of computer operating systems, for example, a Linux operating system, a Unix operating system, an Android operating system, an iOS operating system, or a Windows operating system, that implement service processing with a process (process). The application layer includes applications such as a browser, an address book, word processing software, and instant messaging software.

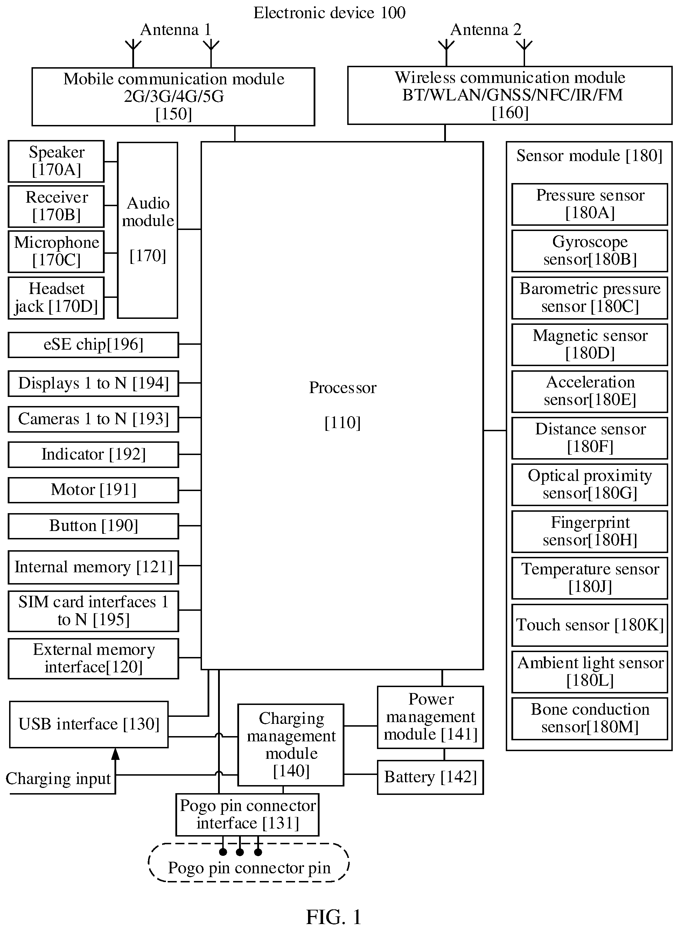

In an example, FIG. 1 is a schematic structural diagram of an electronic device.

The electronic device may include a processor 110, an external memory interface 120, an internal memory 121, a universal serial bus (universal serial bus, USB) interface 130, a pogo pin connector interface 131, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like. The pogo pin connector interface 131 may include a power supply interface and a communication interface. The power supply interface may include an interface corresponding to the positive pin and an interface corresponding to the negative pin. The communication interface may include at least one communication pin. In FIG. 1 of this application, a description is provided by using an example in which the pogo pin connector includes two power supply pins and one communication pin, and this does not constitute any limitation.

It may be understood that an example structure in this embodiment of the present invention does not constitute a specific limitation on the electronic device. In some other embodiments of this application, the electronic device may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

In an example, the processor 110 may further include a micro control unit (micro control unit, MCU), a system on chip (system on chip, SOC), and the like. In this embodiment of this application, the MCU or the SOC may be configured to determine that an external device is connected to a terminal device when detecting a voltage difference exists between two terminals of a first element.

The controller may generate an operation control signal based on instruction operation code and a timing signal, and control obtaining and executing of instructions. For example, in this embodiment of this application, when detecting the voltage difference existing between two terminals of the first element, the processor may control the power supply module to use a larger voltage value to supply power to the external device, or control to use a power supply module with a larger voltage value to supply power to the external device.

A memory may be further arranged in the processor 110, which is configured to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the foregoing memory. Repeated access is avoided, and waiting time of the processor 110 is reduced, thereby improving system efficiency.

In an example, the processor 110 may further include an ADC chip, and the ADC chip is connected to the MCU or the SOC in the processor. In this embodiment of this application, the ADC chip may detect whether the voltage difference exists between two terminals of the first element, and send an ADC signal to the MCU or the SOC when the voltage difference exists between two terminals of the first element, so that the MCU or the SOC can determine that the external device is connected to the terminal device based on the received ADC signal.

In an example, the processor 110 may be integrated with a function of the ADC chip, and may be configured to detect whether a voltage difference exists between two terminals of a circuit element. For example, in this embodiment of this application, when detecting the voltage difference existing between two terminals of the first element, the processor 110 can determine that the external device is connected to the terminal device.

In some embodiments, the processor 110 may include one or more interfaces. The interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (serial clock line, SCL).

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured through software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may further be configured as an I2C interface, an I2S interface, a UART interface, an MIPI, and the like.

The USB interface 130 is an interface that complies with the USB standard specification, and may be specifically a Mini USB interface, a Micro USB interface, a USB Type C interface, and the like. The USB interface 130 may be configured to be connect to a charger to charge the electronic device 100, or may be configured to perform data transmission between the electronic device 100 and a peripheral device. The USB interface may alternatively be configured to connect to a headset to play an audio through the headset. The interface may further be configured to connect to another electronic device such as an AR device.

It may be understood that an interface connection relationship between the modules illustrated in this embodiment of the present invention is merely an example for description, and does not constitute a limitation on a structure of the electronic device. In some other embodiments of this application, the electronic device may alternatively use an interface connection manner different from that in the foregoing embodiment, or use a combination of a plurality of the interface connection manners.

The charging management module 140 is configured to receive a charging input from the charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like. The power management module 141 may further be configured to monitor parameters such as a battery capacity, a quantity of battery cycles, and a battery health state (power leakage and impedance). In some other embodiments, the power management module 141 may alternatively be arranged in the processor 110. In some other embodiments, the power management module 141 and the charging management module 140 may also be arranged in a same device.

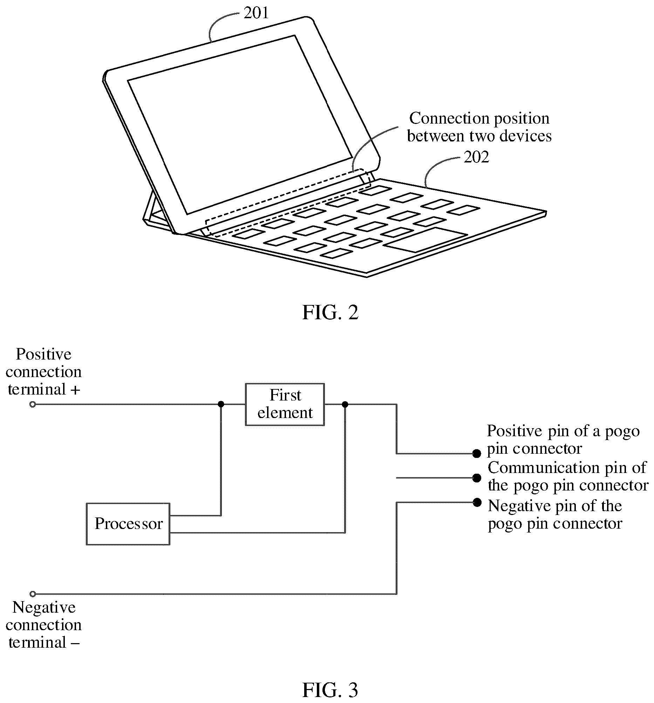

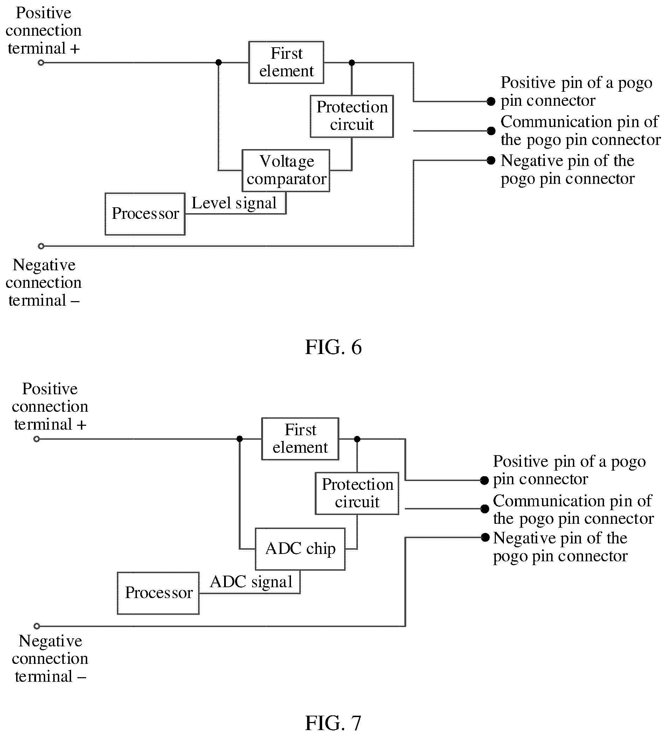

In an example, in this embodiment of this application, the power management module 141 may include a first element, a protection circuit, and a voltage comparator. For a connection manner between the first element and the pogo pin connector, reference is made to FIG. 3 to FIG. 8 below. For a connection manner of the first element, the protection circuit, and the voltage comparator, reference is made to FIG. 6 below. The voltage comparator may be configured to detect whether the voltage difference exists between two terminals of the first element, and send a level signal to the processor 110 when detecting the voltage difference existing between two terminals of the first element, so that the processor 110 can determine that the external device is connected based on the level signal.

The electronic device implements a display function through the GPU, the display 194, the application processor, and the like. The GPU is a microprocessor for image processing and is connected to the display 194 and the application processor. The GPU is configured to perform mathematical and geometric calculation, and is configured to perform graphics rendering. The processor 110 may include one or more GPUs, and is configured to execute program instructions to generate or change display information.

The indicator 192 may be an indicator light, and may be configured to indicate a charging state or a battery change, or may be configured to indicate a message, a missed call, a notification, and the like. For example, the indicator in this embodiment of this application may be configured to indicate that the external device is connected to the terminal device.

The internal memory 121 may be configured to store computer-executable program code. The executable program code includes instructions. The internal memory 121 may include a program storage area and a data storage area. The program storage area may store an operating system, an application required by at least one function (such as a sound playback function and an image display function), and the like. The data storage area may store data (for example, audio data, a phone book, or the like) created during use of the electronic device. In addition, the internal memory 121 may include a high-speed random access memory, and may further include a non-volatile memory, for example, at least one magnetic disk storage device, a flash memory device, or a universal flash storage (universal flash storage, UFS). The processor 110 runs the instructions stored in the internal memory 121, and/or the instructions stored in the memory arranged in the processor, to perform various function applications and data processing of the electronic device.

A software system of the electronic device 100 may use a layered architecture, an event-driven architecture, a microkernel architecture, a microservice architecture, or a cloud architecture. The software system of the electronic device is not limited in this embodiment of this application.

The technical solutions of this application and how the technical solutions of this application resolve the above technical problems are described in detail below through specific embodiments. The following several specific embodiments may be independently implemented, and may alternatively be combined with each other, and the same or similar concepts or processes may not be described repeatedly in some embodiments.

In an example, before the circuit configured to connect to the external device in the terminal device in this embodiment of this application is described, a use scenario of this embodiment of this application is described. FIG. 2 is a schematic diagram of a use scenario of a terminal device. In FIG. 2, a description is provided by using an example in which the terminal device is a tablet computer and the external device is a keyboard, and this does not constitute any limitation.

A tablet computer 201 shown in FIG. 2 may be provided with a male terminal (not shown in FIG. 2) of a pogo pin connector, and a keyboard 202 may be provided with a female terminal (not shown in FIG. 2) of a pogo pin connector. The tablet computer 201 and the keyboard 202 may further be provided with a magnet (not shown in FIG. 2). Positions of the pogo pin connector and the magnet are not limited in this embodiment of this application.

In an example, when the keyboard 202 and the tablet computer 201 are close to each other, the magnet on the keyboard 202 and the magnet on the tablet computer 201 attract each other, so that the keyboard 202 and the tablet computer 201 are attracted together. For the connection between the keyboard 202 and the tablet computer 201, reference is made to FIG. 2.

As shown in FIG. 2, when the tablet computer 201 is connected to the keyboard 202, the female terminal of the pogo pin connector on the keyboard 202 is connected to the male terminal of the pogo pin connector on the tablet computer 201. A position circled by a dashed line in FIG. 2 may be a connection position between two devices, and the position may be a position at which the male terminal of the pogo pin connector and the female terminal of the pogo pin connector are connected.

When the tablet computer 201 and the keyboard 202 are connected through the pogo pin connector, the tablet computer 201 may use a battery to supply power to the keyboard 202 through the positive pin and the negative pin of the pogo pin connector, and may use a processor to communicate with the keyboard 202 through a communication pin of the pogo pin connector.

It may be understood that the pogo pin connector of the terminal device may include one communication pin, or may include a plurality of communication pins. A quantity of communication pins of the pogo pin connector is not limited in this embodiment of this application. For ease of description, subsequent schematic circuit diagrams are described by using an example in which the pogo pin connector of the terminal device include one communication pin, and the communication pin is located between the positive pin and the negative pin of the pogo pin connector.

In an example, as shown in FIG. 2, when the external device is connected to the terminal device through the pogo pin connector, the terminal device can determine that the external device is connected to the terminal device through a circuit shown in FIG. 3. FIG. 3 is a schematic diagram I of a circuit for detecting connection of an external device according to an embodiment of this application.

As shown in FIG. 3, the terminal device may include a power supply module, a first element, a pogo pin connector, and a processor. The power supply module includes a positive connection terminal and a negative connection terminal, and the pogo pin connector includes a positive pin, a negative pin, and a communication pin.

In an example, the processor may be an MCU or an SOC integrated with a function of detecting a voltage difference between two terminals of an element. For example, the processor of the terminal device may be integrated with a function of an ADC chip. The first element may be an element having a resistance value less than a specific value. The resistance value of the first element is not limited in this embodiment of this application. The resistance value of the first element is proportional to an amount of power consumed by the first element when the first element operates. Therefore, when an external device is connected to the terminal device, the amount of power consumed by the first element is relatively small.

As shown in FIG. 3, the first element is connected between the positive connection terminal of the power supply module and the positive pin of the pogo pin connector, and the negative connection terminal of the power supply module is connected to the negative pin of the pogo pin connector. A first input terminal and a second input terminal of the processor are respectively connected to two terminals of the first element.

In an example, the first element may further be connected between the negative connection terminal of the power supply module and the negative pin of the pogo pin connector, and the positive connection terminal of the power supply module is connected to the positive pin of the pogo pin connector.

In an example, when the external device is connected to the terminal device through the pogo pin connector, the power supply module, the first element, and the external device form a path, and a voltage difference exists between two terminals of the first element. The first input terminal and the second input terminal of the processor respectively obtain a voltage value between the two terminals of the first element, and compare the two collected voltage values, to determine whether the voltage difference exists between the two terminals of the first element. When detecting the voltage difference existing between the two terminals of the first element, the processor can determine that an external device is connected to the terminal device.

In an example, after the terminal device determines that the external device is connected to the terminal device through the pogo pin connector, the power supply module may be configured to supply power to the external device through the pogo pin connector. The processor may further be connected to the communication pin of the pogo pin connector (not shown in FIG. 3). After the external device is connected to the terminal device, the processor may communicate with the external device through the communication pin of the pogo pin connector. For example, the processor of the tablet computer may communicate with a keyboard through the communication pin of the connector, and receive text inputted by the keyboard.

In an example, when the processor determines that the external device is connected to the terminal device, the processor may further control the terminal device to output prompt information. For example, when the terminal device determines that the keyboard is connected, an icon of the keyboard may be displayed on a display of the terminal, or text for prompting keyboard connection is displayed. The prompt information is not limited in this embodiment of this application.

In this way, when the terminal device and the external device are connected through the pogo pin connector, the power supply module, the first element, and the external device form a path. The processor can determine that the external device is connected to the terminal device without arranging a Hall element in the terminal device when detecting that the voltage difference exists between two terminals of the first element, so that a case in which the terminal device does not detect keyboard connection may be improved, accuracy of detection of the external device connection may be improved, and costs of the terminal device may be reduced.

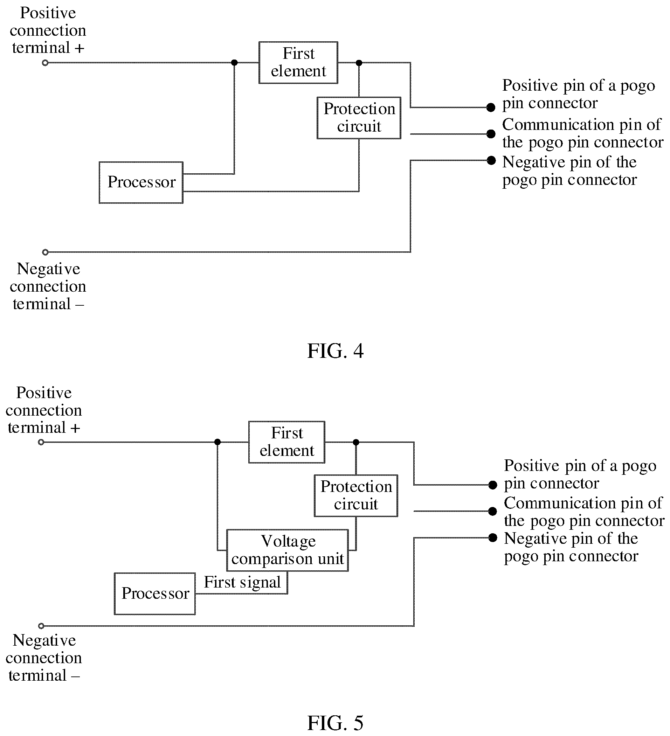

In an example, to reduce a case in which damage of an element in a circuit shown in FIG. 3, based on the circuit shown in FIG. 3, the terminal device may further include a protection circuit. Reference may be made to FIG. 4. FIG. 4 is a schematic diagram II of a circuit for detecting connection of an external device according to an embodiment of this application.

As shown in FIG. 4, the terminal device may include a power supply module, a first element, a pogo pin connector, a protection circuit, and a processor. The protection circuit may be a voltage protection circuit or a current protection circuit. This is not limited in this embodiment of this application.

In an example, as shown in FIG. 4, one terminal of the protection circuit is connected to one terminal of the first element connected to a positive pin of the pogo pin connector, an other terminal of the protection circuit is connected to a first input terminal of the processor, and a second input terminal of the processor is connected to one terminal of the first element connected to a positive connection terminal of the power supply module. A connection manner of the power supply module, the first element, and the pogo pin connector is the same as that in FIG. 3. Details are not described herein again.

In an example, the protection circuit may further be connected between the processor and one terminal of the first element connected to the positive connection terminal of the power supply module.

In an example, the first element may further be connected between a negative connection terminal of the power supply module and a negative pin of the pogo pin connector. In this connection manner, the protection circuit may be connected between one terminal of the first element connected to the negative connection terminal of the power supply module and the processor, or the protection circuit may be connected between one terminal of the first element connected to the negative pin of the pogo pin connector and the processor.

In an example, when the external device is connected to the terminal device through the pogo pin connector, the power supply module, the first element, and the external device form a path, and a voltage difference exists between two terminals of the first element. When detecting the voltage difference existing between two terminals of the first element, the processor can determine that an external device is connected to the terminal device. For a manner in which the processor detects that the voltage difference exists between two terminals of the first element, reference is made to related descriptions of FIG. 3. Details are not described herein again.

In this way, by arranging the protection circuit in the terminal device, a case in which damage of an element in the circuit may be reduced, and a service life of the element in the circuit can be prolonged. In addition, it may be implemented that the processor determines that the external device is connected to the terminal device, thereby improving accuracy of detection of the external device connection. Compared with a Hall element, costs of the circuit are reduced.

In this embodiment of this application, the terminal device may further protect a voltage comparison unit configured to detect the voltage difference between the two terminals of the first element. In an example, FIG. 5 is a schematic diagram of a circuit for detecting connection of an external device including a voltage protection unit.

As shown in FIG. 5, the terminal device may include a power supply module, a first element, a pogo pin connector, a protection circuit, a voltage comparison unit, and a processor.

As shown in FIG. 5, the first element is connected between a positive connection terminal of the power supply module and a positive pin of the pogo pin connector, and a negative connection terminal of the power supply module is connected to a negative pin of the pogo pin connector. One terminal of the protection circuit is connected to one terminal of the first element connected to the positive pin of the pogo pin connector, an other terminal of the protection circuit is connected to a first terminal of the voltage comparison unit, a second terminal of the voltage comparison unit is connected to one terminal of the first element connected to the positive connection terminal of the power supply module, and a third terminal of the voltage comparison unit is connected to the processor.

In an example, as shown in FIG. 5, when the first element is connected between the positive connection terminal of the power supply module and the positive pin of the pogo pin connector, a connection manner of the protection circuit, the voltage comparison unit, and the processor may further include the following. One terminal of the protection circuit is connected to one terminal of the first element connected to the positive connection terminal of the power supply module, the other terminal of the protection circuit is connected to the first terminal of the voltage comparison unit, the second terminal of the voltage comparison unit is connected to one terminal of the first element connected to the positive pin of the pogo pin connector, and the third terminal of the voltage comparison unit is connected to the processor.

In an example, a connection manner of the power supply module, the first element, and the pogo pin connector may further include the following. The first element may further be connected between the negative connection terminal of the power supply module and the negative pin of the pogo pin connector, and the positive connection terminal of the power supply module is connected to the positive pin of the pogo pin connector.

In an example, the first element may further be connected between the negative connection terminal of the power supply module and the negative pin of the pogo pin connector. When the first element is connected between the negative connection terminal of the power supply module and the negative pin of the pogo pin connector, a connection manner of the protection circuit, the voltage comparison unit, and the processor may include the following. One terminal of the protection circuit is connected to one terminal of the first element connected to the negative connection terminal of the power supply module, the other terminal of the protection circuit is connected to the first terminal of the voltage comparison unit, the second terminal of the voltage comparison unit is connected to one terminal of the first element connected to the negative pin of the pogo pin connector, and the third terminal of the voltage comparison unit is connected to the processor. Alternatively, one terminal of the protection circuit is connected to one terminal of the first element connected to the negative pin of the pogo pin connector, the other terminal of the protection circuit is connected to the first terminal of the voltage comparison unit, the second terminal of the voltage comparison unit is connected to one terminal of the first element connected to the negative connection terminal of the power supply module, and the third terminal of the voltage comparison unit is connected to the processor.

In an example, when the external device is connected to the terminal device through the pogo pin connector, the power supply module, the first element, and the external device form a path, and a voltage difference exists between two terminals of the first element. The voltage comparison unit may collect voltage values of the two terminals of the first element, and compare the two collected voltage values, to determine whether the voltage difference exists between two terminals of the first element. When detecting the voltage difference existing between two terminals of the first element, the voltage comparison unit may send a first signal to the processor. When receiving the first signal sent by the voltage comparison unit, the processor can determine that the external device is connected to the terminal device.

In this way, when the terminal device and the external device are connected through the pogo pin connector, the power supply module, the first element, and the external device form a path. The voltage comparison unit may detect the voltage difference existing between the two terminals of the first element and send the first signal to the processor, so that the processor can determine that the external device is connected to the terminal device without arranging a Hall element in the terminal device based on the received first signal. A case in which the terminal device does not detect a keyboard connection may be improved, accuracy of detection of the external device connection may be improved, and costs of the terminal device may be reduced.

In an example, in the circuit shown in FIG. 5, the voltage comparison unit may include a voltage comparator or an ADC chip. A case in which the voltage comparison unit is the voltage comparator and a case in which the voltage comparison unit is the ADC chip are respectively described below.

In an example, FIG. 6 is a schematic diagram of a circuit for detecting connection of an external device including a voltage comparator.

As shown in FIG. 6, the terminal device may include a power supply module, a first element, a pogo pin connector, a voltage comparator, a protection circuit, and a processor. A circuit shown in FIG. 6 may be a circuit obtained by replacing a voltage comparison unit with the voltage comparator. For a connection manner of the power supply module, the first element, the pogo pin connector, the protection circuit, the voltage comparator, and the processor, reference may be made to related descriptions of FIG. 5. Details are not described herein again.

In an example, as shown in FIG. 6, when the external device is connected to the terminal device through the pogo pin connector, the power supply module, the first element, and the external device form a path, and a voltage difference exists between two terminals of the first element. The voltage comparator may collect the voltage difference between the two terminals of the first element, and compare the two collected voltage differences, to determine whether the voltage difference exists between two terminals of the first element. When detecting the voltage difference existing between two terminals of the first element, the voltage comparator sends a level signal to the processor. When receiving the level signal sent by the voltage comparator, the processor can determine that the external device is connected to the terminal device.

In an example, the level signal sent by the voltage comparator to the processor may be a high-level signal or a low-level signal. The level signal sent by the voltage comparator is related to a connection manner of a positive input terminal and a negative input terminal of the voltage comparator in the circuit. This is not limited in this embodiment of this application. For example, in the circuit shown in FIG. 6, when the positive input terminal of the voltage comparator is one terminal of the first element connected to a positive connection terminal of the power supply module, and the negative input terminal is one terminal connected to a voltage protector, a voltage at the positive input terminal is higher than a voltage at the negative input terminal, and the voltage comparator may output the high-level signal.

In this way, when the terminal device and the external device are connected through the pogo pin connector, the voltage difference between the two terminals of the first element may be detected through the voltage comparator, so that accuracy of the detected voltage difference is relatively high, thereby further improving accuracy of detection of device connection.

In an example, FIG. 7 is a schematic diagram of a circuit for detecting connection of an external device including an ADC chip.

As shown in FIG. 7, the terminal device may include a power supply module, a first element, a pogo pin connector, a protection circuit, an ADC chip, and a processor. A circuit shown in FIG. 7 may be a circuit obtained by replacing a voltage comparison unit with the ADC chip. For a connection manner of the power supply module, the first element, the pogo pin connector, the protection circuit, the ADC chip, and the processor, reference may be made to related descriptions of FIG. 5. Details are not described herein again.

In an example, when the external device is connected to the terminal device through the pogo pin connector, the power supply module, the first element, and the external device form a path, and a voltage difference exists between two terminals of the first element. The ADC chip may collect the voltage difference between the two terminals of the first element, and compare the two collected voltage differences, to determine whether the voltage difference exists between two terminals of the first element. When detecting the voltage difference existing between two terminals of the first element, the ADC chip sends an ADC signal to the processor. When receiving the ADC signal sent by the ADC chip, the processor can determine that the external device is connected to the terminal device.

In an example, the ADC signal sent by the ADC chip to the processor is a digital signal. The ADC signal is not specifically limited in this embodiment of this application.

In this way, when the terminal device and the external device are connected through the pogo pin connector, the voltage difference between the two terminals of the first element may be detected through the ADC chip, so that accuracy of the detected voltage difference is relatively high, thereby further improving accuracy of detection of device connection.

In this embodiment of this application, the first element may include any of the following elements: a diode, a reed switch, a magneto-sensitive diode, and a magneto-sensitive switch.

Different first elements operate in different manners. Implementations in which different first elements are connected to the circuits shown in FIG. 3 to FIG. 7 are described below.

In a possible implementation, the first element may be a diode, and the diode may be connected between a positive connection terminal of the power supply module and a positive pin of the pogo pin connector. The diode may also be connected between a negative connection terminal of the power supply module and a negative pin of the pogo pin connector.

In an example, when the diode is connected between the positive connection terminal of the power supply module and the positive pin of the pogo pin connector, a specific connection manner may be as follows. A positive terminal of the diode is connected to the positive connection terminal of the power supply module, and a negative terminal of the diode is connected to the positive pin of the pogo pin connector. When the diode is connected between the negative connection terminal of the power supply module and the negative pin of the pogo pin connector, a specific connection manner may be as follows. The positive terminal of the diode is connected to the negative pin of the pogo pin connector, and the negative terminal of the diode is connected to the negative connection terminal of the power supply module. A position of the diode in the circuit is not limited in this embodiment of this application.

It may be understood that when the terminal device is connected to the external device are connected through the pogo pin connector, a voltage outputted by the positive connection terminal of the power supply module enables the diode to be in a turn-on state. In this way, the power supply module, the diode, and the external device form a path, and when detecting that a voltage difference existing between the two terminals of the diode, the processor can determine that the external device is connected to the terminal device. For a process in which the processor determines that the external device is connected to the terminal device, reference may be made to related descriptions of FIG. 3 to FIG. 7. Details are not described herein again.

In a possible implementation, the first element may be the reed switch, and the reed switch may be connected between a positive connection terminal of the power supply module and a positive pin of the pogo pin connector. The reed switch may alternatively be connected between the negative pin of the pogo pin connector and the negative connection terminal of the power supply module. A position of the reed switch in the circuit is not limited in this embodiment of this application.

In an example, the external device may be provided with a magnet, so that a connection between the external device and the terminal device is more stable. When the external device and the terminal device are connected through the pogo pin connector, the external device may be attracted to the terminal device through the magnet. The reed switch senses a magnetic field generated by the magnet, and changes from an open state to a closed state. In this way, the power supply module, the reed switch, and the external device form a path. When detecting that a voltage difference existing between the two terminals of the reed switch, the processor can determine that the external device is connected to the terminal device. For a process in which the processor determines that the external device is connected to the terminal device, reference may be made to related descriptions of FIG. 3 to FIG. 7. Details are not described herein again.

In a possible implementation, the first element may be the magneto-sensitive diode, and the magneto-sensitive diode may be connected between the positive connection terminal of the power supply module and the positive pin of the pogo pin connector. The magneto-sensitive diode may also be connected between the negative connection terminal of the power supply module and the negative pin of the pogo pin connector.

In an example, when the magneto-sensitive diode is connected between the positive connection terminal of the power supply module and the positive pin of the pogo pin connector, a specific connection manner may be as follows. A positive terminal of the magneto-sensitive diode is connected to the positive connection terminal of the power supply module, and a negative terminal of the magneto-sensitive diode is connected to the positive pin of the pogo pin connector. When the magneto-sensitive diode is connected between the negative connection terminal of the power supply module and the negative pin of the pogo pin connector, a specific connection manner may be as follows. The positive terminal of the magneto-sensitive diode is connected to the negative pin of the pogo pin connector, and the negative terminal of the magneto-sensitive diode is connected to the negative connection terminal of the power supply module. A position of the magneto-sensitive diode in the circuit is not limited in this embodiment of this application.

In an example, the external device may be provided with a magnet, so that a connection between the external device and the terminal device is more stable. When the external device and the terminal device are connected through the pogo pin connector, the external device may be attracted to the terminal device through the magnet, and a path is formed by the power supply module, the magneto-sensitive diode, and the external device. In this way, when detecting the voltage difference exists between the two terminals of the reed switch, the processor can determine that the external device is connected to the terminal device. For a process in which the processor determines that the external device is connected to the terminal device, reference may be made to related descriptions of FIG. 3 to FIG. 7. Details are not described herein again.

In an example, when the external device is attracted to the terminal device through the magnet, the magneto-sensitive diode may sense a change of the magnetic field generated by the magnet, and reduce a resistance value of the magneto-sensitive diode, so that the magneto-sensitive diode consumes less electrical energy.

In a possible implementation, the first element may be a magneto-sensitive switch, and the magneto-sensitive switch may be connected between a positive connection terminal of the power supply module and the positive pin of the pogo pin connector. The magneto-sensitive switch may also be connected between the negative pin of the pogo pin connector and the negative connection terminal of the power supply module. A position of the magneto-sensitive switch in the circuit is not limited in this embodiment of this application.

In an example, the external device may be provided with a magnet, so that a connection between the external device and the terminal device is more stable. When the external device and the terminal device are connected through the pogo pin connector, the external device may be attracted to the terminal device through the magnet, and the magneto-sensitive switch senses the magnetic field generated by the magnet, and changes from an open state to a closed state. In this way, the power supply module, the magneto-sensitive switch, and the external device form a path. When detecting a voltage difference existing between the two terminals of the reed switch, the processor can determine that the external device is connected to the terminal device. For a process in which the processor determines that the external device is connected to the terminal device, reference may be made to related descriptions of FIG. 3 to FIG. 7. Details are not described herein again.

It may be understood that the first element may further include another element having a resistance value less than a specific value. In this embodiment of this application, a description is provided by using an example in which the first element includes any one of the diode, the reed switch, the magneto-sensitive diode, and the magneto-sensitive switch.

In this embodiment of this application, a pin of the pogo pin connector may be exposed to the air. However, a pin of a charged pogo pin connector may be subject to corrosion when exposed to the air, thereby affecting a service life of the pogo pin connector. Because a degree of corrosion of the pin of the pogo pin connector is positively correlated with time and a voltage, the processor may reduce a voltage value outputted by the terminal device through the pin of the pogo pin connector when the external device is disconnected from the terminal device. In other words, when the external device is connected to the terminal device through the pogo pin connector, a power supply of the terminal device may output a relatively small voltage. When it is determined that the external device is connected to the terminal device, a processor of the terminal device may control the power supply of the terminal device to output a relatively large voltage.

In an example, when the external device is connected to the terminal device, the terminal device may change the voltage value through the following two possible implementations.

In a possible implementation, for example, in the circuit shown in FIG. 3 to FIG. 7, when the external device is connected to the terminal device through the pogo pin connector, a voltage outputted by the power supply module may be a first voltage value. When the processor detects that the voltage difference exists between two terminals of the first element, the processor may control the voltage outputted by the power supply module to increase from the first voltage value to a second voltage value. For a process in which the processor detects that the voltage difference exists between two terminals of the first element, reference may be made to related descriptions in the foregoing embodiments. Details are not described herein again.

In an example, when the first element is the diode, the first voltage value outputted by the power supply module is greater than a turn-on voltage of the diode. In this way, when the external device is connected to the terminal device through the pogo pin connector, the first voltage value outputted by the power supply module may enable the diode to be in a turn-on state. The power supply module, the first element, and the external device form a path, so that a voltage difference exists between two terminals of the diode.

In an example, when the external device is disconnected from the terminal device, and the processor detects that no voltage difference exists between two terminals of the first element, the processor may control the voltage outputted by the power supply module to decrease from the second voltage value to the first voltage value. A process in which the processor detects that no voltage difference exists between two terminals of the first element is similar to a process in which the processor detects that the voltage difference exists between two terminals of the first element. Details are not described herein again.

In another possible implementation, a power supply module of the terminal device may include a first power supply module and a second power supply module, and a voltage outputted by the first power supply module is less than a voltage outputted by the second power supply module.

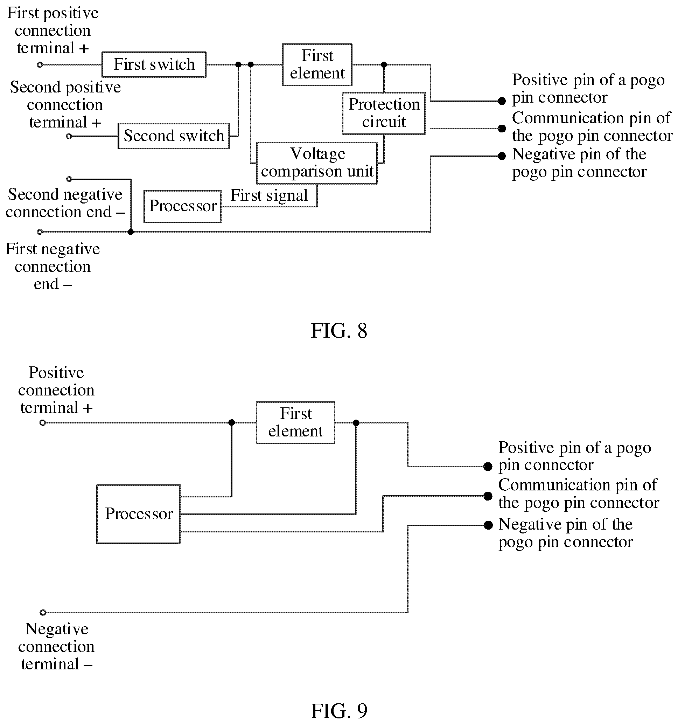

FIG. 8 is a schematic diagram of a circuit for detecting connection of an external device including a first power supply module and a second power supply module according to an embodiment of this application.

As shown in FIG. 8, a terminal device may include a first power supply module, a second power supply module, a first switch, a second switch, a first element, a pogo pin connector, a protection circuit, a voltage comparison unit, and a processor. The first power supply module includes a first positive connection terminal and a first negative connection terminal, and the second power supply module includes a second positive connection terminal and a second negative connection terminal.

As shown in FIG. 8, the first switch is connected between the first positive connection terminal of the first power supply module and the first element, and the second switch is connected between the second positive connection terminal of the second power supply module and the first element. Certainly, the first switch may further be connected between the first negative connection terminal of the first power supply module and a negative pin of the pogo pin connector, and the second switch may further be connected between the second negative connection terminal of the second power supply module and the negative pin of the pogo pin connector. Positions of the first switch and the second switch in the circuit are not limited in this embodiment of this application. The first switch and the second switch are in communication connection with the processor (not shown in FIG. 8).

A connection manner of the first element, the pogo pin connector, the protection circuit, the voltage comparison unit, and the processor in FIG. 8 is the same as that in FIG. 5. Details are not described herein again.

In an example, when the external device is not connected to the terminal device, the first switch may be in an open state, and the second switch may be in a closed state. When the external device is connected to the terminal device through the pogo pin connector, the first power supply module, the first element, and the external device may form a path. The processor can determine that the external device is connected to the terminal device based on a detected voltage difference existing between the two terminals of the first element.

When it is determined that the external device is connected to the terminal device, the processor of the terminal device may control states of the first switch and the second switch, to switch a path on which the first element is located. In an example, in the circuit shown in FIG. 8, when it is determined that the external device is connected to the terminal device, the processor may control the first switch to be in the closed state and control the second switch to be in the open state, so that the first element is switched from being connected to a path between the first positive connection terminal of the first power supply module and a positive pin to being connected to a path between the second positive connection terminal of the second power supply module and a positive pin. In this way, the terminal device may supply power to the external device through the second power supply module having a relatively large output voltage value.

In an example, in the circuit shown in FIG. 8, the first element may further be connected between the first negative connection terminal of the first power supply module and the negative pin of the pogo pin connector. Correspondingly, when the processor determines that the external device is connected to the terminal device, the processor may control the first switch to be in the closed state and control the second switch to be in the open state, so that the first element is switched from being connected to a path between the first negative connection terminal of the first power supply module and a negative pin to being connected to a path between the second negative connection terminal of the second power supply module and a negative pin.

In an example, the first power supply module and the second power supply module may be applied to any one of the circuits shown in FIG. 3 to FIG. 8. In this embodiment of this application, a description is provided by using an example in which the first power supply module and the second power supply module are applied to the circuit shown in FIG. 5, and this does not constitute any limitation.

In an example, when the external device is disconnected from the terminal device, the voltage comparison unit detects that no voltage difference exists between two terminals of the first element and sends a second signal to the processor. The processor controls the first switch to be in the open state and controls the second switch to be in the closed state based on the received second signal. In this way, when the external device is disconnected from the terminal device, the first power supply module is connected to the pogo pin connector through the first element, so that a pin of the pogo pin connector is not easily corroded, and a service life of the pogo pin connector is prolonged.

In an example, when the first element is a diode, a voltage outputted by the first power supply module needs to be greater than a turn-on voltage of the diode. In this way, when the external device is connected to the terminal device through the pogo pin connector, the voltage outputted by the first power supply module may enable the diode to be in a turn-on state. The first power supply module, the first element, and the external device may form a path, so that a voltage difference exists between two terminals of the diode.

It should be noted that the foregoing embodiments are described by using an example in which the power supply module usually supplies power to the external device. To further improve a case in which the pin of the pogo pin connector is easily corroded as a result of frequent power supply, an embodiment of this application further provides a circuit that the power supply module does not usually supply power to the external device when no external device is connected to the terminal device. As shown in FIG. 9, FIG. 9 is a schematic diagram of a circuit for detecting disconnection of an external device from a terminal device according to an embodiment of this application.

As shown in FIG. 9, the terminal device may include a power supply module, a first element, a pogo pin connector, and a processor. A communication pin of the pogo pin connector is connected to the processor. For a connection of another component, reference is made to related descriptions in FIG. 3. Details are not described herein again.

In an example, in a circuit shown in FIG. 9, when the external device is connected to the terminal device through the pogo pin connector, the processor may detect that the external device is connected to the terminal device through the communication pin of the pogo pin connector, and control the power supply module to output a voltage to supply power to the external device.

Further, when the external device is disconnected from the terminal device, the processor may detect that no voltage difference exists between two terminals of the first element, and the processor can determine that the external device is disconnected from the terminal device, and control the power supply module not to output a voltage.

In this way, the processor may accurately determine that the external device is disconnected from the terminal device, and control the power supply module not to output a voltage, so that a pin of the pogo pin connector is not easily corroded.

An embodiment of this application further provides a method for detecting connection of an external device. The method is applied to the terminal device in the foregoing embodiments.

In an example, the method further includes the following. When detecting a voltage difference existing between two terminals of a first element, a processor of the terminal device determines that the external device is connected to the terminal device. For a circuit of a corresponding terminal device when the method is implemented, reference may be made to FIG. 3. Details are not described herein again.

In a possible implementation, the method for detecting connection of an external device may further include the following. When detecting a voltage difference existing between two terminals of the first element, a voltage comparison unit sends a first signal to the processor; and when receiving the first signal, the processor determines that the external device is connected to the terminal device. For a circuit of a corresponding terminal device when the method is implemented, reference may be made to FIG. 5. Details are not described herein again.

In a possible implementation, the voltage comparison unit may include a voltage comparator. The method for detecting connection of an external device may further include the following. When detecting the voltage difference existing between two terminals of the first element, the voltage comparator sends a level signal to the processor; and when receiving the level signal, the processor determines that the external device is connected to the terminal device. For a circuit of a corresponding terminal device when the method is implemented, reference may be made to FIG. 6. Details are not described herein again.

In a possible implementation, the voltage comparison unit may include an ADC chip. The method for detecting connection of an external device may further include the following. When detecting a voltage difference existing between two terminals of the first element, the ADC chip sends an ADC signal to the processor; and when receiving the ADC signal, the processor determines that the external device is connected to the terminal device. For a circuit of a corresponding terminal device when the method is implemented, reference may be made to FIG. 7. Details are not described herein again.

In a possible implementation, the method for detecting connection of an external device further include the following. When detecting a voltage difference existing between two terminals of the first element, the processor controls the voltage outputted by the power supply module to increase from a first voltage value to a second voltage value.

In a possible implementation, the power supply module may include a first power supply module and a second power supply module, and a voltage outputted by the first power supply module is less than a voltage outputted by the second power supply module. The method for detecting connection of an external device may further include the following. When detecting the voltage difference existing between two terminals of the first element and the first element being connected to a path between a first positive connection terminal of the first power supply module and a positive pin, the processor switches the first element to be connected to a path between a second positive connection terminal of the second power supply module and the positive pin. Alternatively, when detecting the voltage difference existing between two terminals of the first element and the first element being connected to a path between a first negative connection terminal of the first power supply module and a negative pin, the processor switches the first element to be connected to a path between a second negative connection terminal of the second power supply module and the negative pin. For a circuit of a corresponding terminal device when the method is implemented, reference may be made to FIG. 8. Details are not described herein again.

The foregoing mainly describes the solutions provided in embodiments of this application from a perspective of a method. To implement the foregoing functions, a corresponding hardware structure and/or software module configured to perform each function are included. A person skilled in the art should be easily aware that example method steps in the examples described with reference to embodiments disclosed in this specification may be implemented in a form of hardware or a combination of hardware and computer software in this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, an apparatus for implementing the method for detecting connection of an external device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software function module. It should be noted that in embodiments of this application, the module division is an example, and is merely logical function division, and additional division manners may exist during actual implementation.

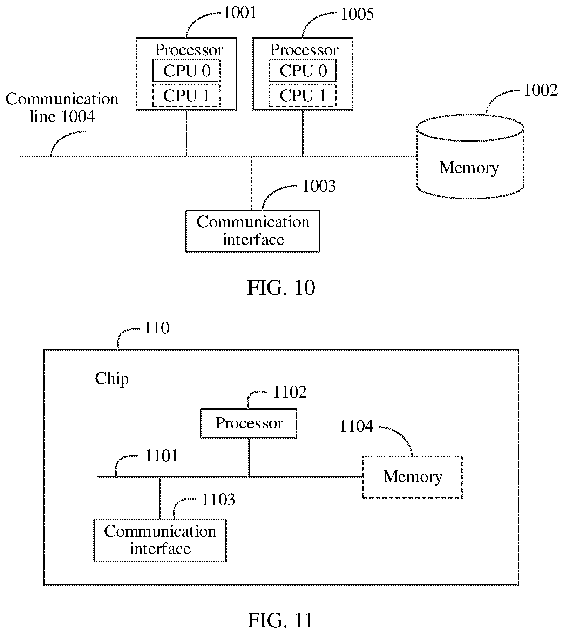

FIG. 10 is a schematic diagram of a hardware structure of another terminal device according to an embodiment of this application. As shown in FIG. 10, the terminal device may include a processor 1001, a communication line 1004, and at least one communication interface (a communication interface 1003 is used as an example for description in FIG. 10).

The processor 1001 may be a general-purpose central processing unit (central processing unit, CPU), a microprocessor, an application specific integrated circuit (application-specific integrated circuit, ASIC), an SOC, an MCU, or one or more integrated circuits configured to control program execution of solutions of this application.

The communication line 1004 may include a circuit configured to send information between the foregoing components.

The communication interface 1003 is an apparatus of any transceiver type, and is configured to communicate with another device or a communication network, such as the Ethernet or a wireless local area network (wireless local area networks, WLAN).

Possibly, the terminal device may further include a memory 1002.

The memory 1002 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be connected by a computer, but is not limited thereto. The memory may exist independently, and is connected to the processor through the communication line 1004. The memory may alternatively be integrated with the processor.

The memory 1002 is configured to store computer-executable instructions for executing the solutions of this application, and the processor 1001 controls execution. The processor 1001 is configured to execute the computer-executable instructions stored in the memory 1002. For example, in this embodiment of this application, when detecting a voltage difference existing between two terminals of the first element, the processor 1001 can determine that the external device is connected to the terminal device.

Possibly, the computer-executable instructions in this embodiment of this application may also be referred to as application code. This is not specifically limited in this embodiment of this application.

During specific implementation, in an embodiment, the processor 1001 may include one or more CPUs, for example, a CPU 0 and a CPU 1 in FIG. 10.

During specific implementation, in an embodiment, the terminal device may include one or more processors, for example, a processor 1001 and a processor 1005 in FIG. 10. Each of these processors may be a single-core (single-CPU) processor, or may be a multi-core (multi-CPU) processor. The processor herein may be one or more devices, circuits, and/or processing cores configured to process data (for example, a computer program instruction).

FIG. 11 is a schematic structural diagram of a chip according to an embodiment of this application. A chip 110 includes one or at least two (including two) processors 111, a communication line 112, a communication interface 113, and a memory 114.

In some implementations, a memory 114 stores the following elements: an executable module, a data structure, or a subset thereof, or an extended set thereof.

The foregoing method described in embodiments of this application is applicable to the processor 111 or may be implemented by the processor 111. The processor 111 may be an integrated circuit chip and has a signal processing capability. During implementation, each step of the foregoing method may be completed through an integrated logic circuit of hardware in the processor 111 or an instruction in the form of software. The foregoing processor 111 may be a general-purpose processor, (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component.

The processor 111, the memory 114, and the communication interface 113 may communicate with each other through the communication line 112.

In the foregoing embodiments, the instructions executed by the processor stored in the memory may be implemented in a form of a computer program product. The computer program product may be pre-written into the memory, or may be downloaded and installed in the memory in the form of software.

An embodiment of this application further provides a computer program product including one or more computer instructions. When the computer program instructions are loaded and executed on the computer, processes or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that may be stored by the computer, or may be a data storage device, such as a server or a data center, integrating one or more usable media. The usable medium may include a magnetic medium (such as a floppy disk, a hard disk, or a magnetic tape), an optical medium (such as a digital versatile disc (digital versatile disc, DVD)), a semi-conductive medium (such as a solid state disk (solid state disk, SSD)), and the like.

An embodiment of this application further provides a computer-readable storage medium. The computer-readable medium may include a computer storage medium and a communication medium, and may further include any medium that can send a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is sent from a website, a server, or another remote source by using a coaxial cable, an optical fiber cable, a twisted pair, a DSL or wireless technologies (such as infrared ray, radio, and microwave), the coaxial cable, the optical fiber cable, the twisted pair, the DSL or the wireless technologies such as infrared ray, radio, and microwave are included in the definition of the medium. The magnetic disk and the optical disc used herein include a compact disc (CD), a laser disc, an optical disc, a digital versatile disc (digital versatile disc, DVD), a floppy disk, and a Blu-ray disc. The magnetic disk generally reproduces data in a magnetic manner, and the optical disc reproduces data optically by using a laser.

With reference to the terminal device in the foregoing embodiments, an embodiment of this application further provides a system for detecting connection of an external device. The system for detecting connection of an external device includes an external device and the terminal device. The external device and the terminal device may be connected through a pogo pin connector, and the terminal device may supply power to the external device through the pogo pin connector.

In an example, the external device may be a keyboard, or another device. This is not limited in this embodiment of this application. The terminal device may be a tablet computer, or may be another device. For details, reference may be made to the foregoing embodiments. This is not limited in this embodiment of this application.

It may be understood that when the external device is the keyboard and the terminal device is the tablet computer, reference may be made to FIG. 2 for the system for detecting connection of an external device provided in this embodiment of this application.

In this embodiment of this application, when the external device is connected to the terminal device through the pogo pin connector, the terminal device can determine that the external device is connected to the terminal device, and may use a power supply module in the terminal device to supply power to the external device through connection of the pogo pin connector. For the method for terminal device determines that the external device is connected to the terminal device, reference may be made to the foregoing embodiments. Details are not described herein again.

It should be noted that the foregoing specific implementations further describe the objectives, technical solutions in detail, and beneficial effects of the present invention. It should be appreciated that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A terminal device, comprising: a power supply module, a first element, a pogo pin connector, and a processor, wherein the first element is an element having a resistance value less than a specific value;
the power supply module comprises a positive connection terminal and a negative connection terminal, the pogo pin connector comprises a positive pin, a negative pin, and a communication pin, and the communication pin is used for communication between the terminal device and an external device;
the first element is connected to a path between the positive connection terminal and the positive pin, or the first element is connected to a path between the negative connection terminal and the negative pin;
the processor is configured to determine that an external device is connected to the terminal device when a voltage difference exists between two terminals of the first element; and
the processor is further configured to control a voltage outputted by the power supply module to increase from a first voltage value to a second voltage value when the voltage difference exists between the two terminals of the first element.

2. The terminal device according to claim 1, further comprising a protection circuit and a voltage comparison unit, wherein
one terminal of the protection circuit is connected to one terminal of the first element, an other terminal of the protection circuit is connected to a first terminal of the voltage comparison unit, a second terminal of the voltage comparison unit is connected to an other terminal of the first element, and a third terminal of the voltage comparison unit is connected to the processor;
the voltage comparison unit is configured to: collect voltage values of the two terminals of the first element, compare the two collected voltage values to determine the voltage difference between the two terminals of the first element, and send a first signal to the processor when detecting the voltage difference existing between the two terminals of the first element; and
the processor is specifically configured to determine that the external device is connected to the terminal device when receiving the first signal.

3. The terminal device according to claim 2, wherein the voltage comparison unit comprises a voltage comparator or an analog-to-digital converter ADC chip.

4. The terminal device according to claim 1, further comprising a protection circuit, wherein
one terminal of the protection circuit is connected to one terminal of the first element, an other terminal of the protection circuit is connected to a first input terminal of the processor, and a second input terminal of the processor is connected to an other terminal of the first element; and
the processor is specifically configured to: collect voltage values of the two terminals of the first element, compare the two collected voltage values to determine the voltage difference between the two terminals of the first element, and determine that the external device is connected to the terminal device when detecting the voltage difference existing between the two terminals of the first element.

5. The terminal device according to any one of claims 1 to 4, wherein the first element comprises any one of the following: a diode, a reed switch, a magneto-sensitive diode, and a magneto-sensitive switch.

6. The terminal device according to claim 5, wherein when the first element comprises the diode, the first voltage value is greater than a turn-on voltage of the diode.

7. The terminal device according to claim 5, wherein the power supply module comprises a first power supply module and a second power supply module, and a voltage outputted by the first power supply module is less than a voltage outputted by the second power supply module; and
the processor is further configured to control the first element to be switched to be connected to a path between a second positive connection terminal of the second power supply module and the positive pin when the voltage difference exists between the two terminals of the first element and the first element is connected to a path between a first positive connection terminal of the first power supply module and the positive pin, or is further configured to control the first element to be switched to be connected to a path between a second negative connection terminal of the second power supply module and the negative pin when the voltage difference existing between the two terminals of the first element is detected and the first element is connected to a path between a first negative connection terminal of the first power supply module and the negative pin.

8. The terminal device according to claim 7, wherein when the first element comprises the diode, the voltage outputted by the first power supply module is greater than the turn-on voltage of the diode.

9. The terminal device according to any one of claims 1 to 8, wherein the processor is further configured to determine that the external device is not connected to the terminal device when no voltage difference exists between the two terminals of the first element, and control the power supply module not to output the voltage.

10. A system for detecting connection of an external device, comprising an external device and the terminal device according to any one of claims 1 to 9, wherein the external device is connected to the terminal device through a pogo pin connector, and the terminal device is configured to supply power to the external device through the pogo pin connector.

11. A system for detecting connection of an external device, comprising an external device and a terminal device, wherein the terminal device comprises a power supply module, a first element, a pogo pin connector, and a processor, wherein the first element is an element having a resistance value less than a specific value;
the power supply module comprises a positive connection terminal and a negative connection terminal, and the pogo pin connector comprises a positive pin, a negative pin, and a communication pin;
the first element is connected to a path between the positive connection terminal and the positive pin, or the first element is connected to a path between the negative connection terminal and the negative pin;
the external device is configured to connect to the terminal device through the pogo pin connector; and
the processor is configured to determine that the external device is connected to the terminal device when a voltage difference exists between two terminals of the first element, and communicate with the external device through the communication pin.

12. The system for detecting connection of an external device according to claim 11, further comprising a protection circuit and a voltage comparison unit, wherein
one terminal of the protection circuit is connected to one terminal of the first element, an other terminal of the protection circuit is connected to a first terminal of the voltage comparison unit, a second terminal of the voltage comparison unit is connected to an other terminal of the first element, and a third terminal of the voltage comparison unit is connected to the processor;
the voltage comparison unit is configured to: collect voltage values of the two terminals of the first element, compare the two collected voltage values to determine the voltage difference between the two terminals of the first element, and send a first signal to the processor when detecting the voltage difference existing between the two terminals of the first element; and
the processor is specifically configured to determine that the external device is connected to the terminal device when receiving the first signal.

13. The system for detecting connection of an external device according to claim 11, further comprising a protection circuit, wherein
one terminal of the protection circuit is connected to one terminal of the first element, an other terminal of the protection circuit is connected to a first input terminal of the processor, and a second input terminal of the processor is connected to an other terminal of the first element; and
the processor is specifically configured to: collect voltage values of the two terminals of the first element, compare the two collected voltage values to determine the voltage difference between the two terminals of the first element, and determine that the external device is connected to the terminal device when detecting the voltage difference existing between the two terminals of the first element.

14. The system for detecting connection of an external device according to any one of claims 11 to 13, wherein the processor is further configured to control a voltage outputted by the power supply module to increase from a first voltage value to a second voltage value when detecting the voltage difference existing between the two terminals of the first element.

15. The system for detecting connection of an external device according to claim 14, wherein the first element comprises any one of the following: a diode, a reed switch, a magneto-sensitive diode, and a magneto-sensitive switch; and
when the first element comprises the diode, the first voltage value is greater than a turn-on voltage of the diode.

16. The system for detecting connection of an external device according to any one of claims 11 to 13, wherein the power supply module comprises a first power supply module and a second power supply module, and a voltage outputted by the first power supply module is less than a voltage outputted by the second power supply module; and
the processor is further configured to control the first element to be switched to be connected to a path between a second positive connection terminal of the second power supply module and the positive pin when the voltage difference exists between the two terminals of the first element and the first element is connected to a path between a first positive connection terminal of the first power supply module and the positive pin, or is further configured to control the first element to be switched to be connected to a path between a second negative connection terminal of the second power supply module and the negative pin when the voltage difference existing between the two terminals of the first element is detected and the first element is connected to a path between a first negative connection terminal of the first power supply module and the negative pin.

17. The system for detecting connection of an external device according to claim 16, wherein the first element comprises any one of the following: a diode, a reed switch, a magneto-sensitive diode, and a magneto-sensitive switch; and
when the first element comprises the diode, the voltage outputted by the first power supply module is greater than the turn-on voltage of the diode.

18. The system for detecting connection of an external device according to any one of claims 11 to 17, wherein the external device comprises a keyboard.

19. The system for detecting connection of an external device according to any one of claims 11 to 18, wherein the processor is further configured to determine that the external device is not connected to the terminal device when no voltage difference exists between the two terminals of the first element, and control the power supply module not to output the voltage.
